# NOUVEAU FASCICULE DE BREVET EUROPEEN

(11) **EP 2 030 498 B2**
(45) Date de publication et mention de la décision concernant l'opposition: **02.12.2020**
(45) Mention de la délivrance du brevet: 22.12.2010
(21) Numéro de dépôt: 08358006.8
(22) Date de dépôt: 22.08.2008
(51) Int. Cl.: A01D 46/28, A23N 15/02, B07B 1/15, C12G 1/00

(54) **Table de tri à rouleaux trieurs, pour l'élimination des corps étrangers restant mêlés aux produits de la récolte de baies de raisin**
Sortiermaschine mit Rollenförderern, zum Entfernen von mit von dem Boden geernteten Traubenbeeren vermischten Fremdkörpern
Sorting device with conveyor rolls, for removing foreign bodies mixed with grape berries harvested from the soil

(30) Priorité: 30.08.2007 FR 0706085
(43) Date de publication de la demande: 04.03.2009
(73) Titulaire: PELLENC (Société Anonyme), 84120 Pertuis (FR)
(72) Inventeur: Pellenc, Roger, 84120 Pertuis (FR); Gialis, Jean-Marc, 84460 Cheval Blanc (FR)
(74) Mandataire: Nuss, Laurent

(56) Documents cités:
- EP-A- 0 951 950
- EP-A1- 1 362 643
- DE-A1- 1 965 243
- DE-C- 95 784
- ES-A1- 2 235 602
- ES-A1- 2 235 627
- ES-A1- 2 272 179
- ES-A2- 2 079 269
- FR-A- 2 734 455
- FR-A- 2 795 599
- US-A- 4 836 388
- US-A- 5 203 259

## Description

La présente invention concerne une table de tri à rouleaux trieurs, pour l'élimination des corps étrangers restant mélangés aux produits de la récolte de petits fruits. Elle s'applique également aux machines de récolte et, en particulier aux machines à vendanger comportant une ou plusieurs table(s) de tri à rouleaux trieurs.

La table de tri à rouleaux trieurs selon l'invention est destinée à assurer l'élimination des corps étrangers, (pétioles, feuilles, morceaux de feuilles ou de sarments, éclats de piquets ou de tuteurs, débris minéraux, insectes, petits animaux, etc.....) restant mêlés aux baies de raisin, après l'égrappage de la vendange.

Compte tenu de l'application particulièrement intéressante envisagée au traitement de la vendange, l'invention est toutefois décrite ci-après en relation avec cette application.

Dans la majorité des procédés de vinification mis en oeuvre, le raisin est d'abord égrappé avant foulage et/ ou pressurage de la vendange. Cette opération d'égrappage effectuée par différents procédés et dispositifs mécaniques, a pour but de détacher les baies des grappes de raisin et de séparer ainsi lesdites baies des rafles auxquelles elles se trouvent attachées après la vendange, et, de la sorte, d'éviter la présence d'amertume et de goûts herbacés et végétaux dans le vin.

Cependant, après cette opération d'égrappage, que celle-ci ait été ou non précédée d'une opération de nettoyage de la récolte, un certain pourcentage de débris et de corps étrangers restent mêlés à la vendange, de sorte qu'une opération de tri est nécessaire pour les extraire, si l'on souhaite que la présence de ces corps étrangers n'altère pas les qualités du vin et notamment ses qualités organoleptiques.

Cette opération de tri peut être réalisée manuellement ou de manière automatisée sur une table de tri agencée en fonction de l'un ou de l'autre de ces modes de tri.

Les tables de tri linéaires destinées au tri manuel comportent un support sur lequel est étalée la vendange et de part et d'autre duquel se tiennent les personnes préposées au tri. Ce support peut être statique dans le mode d'exécution le plus rustique, mais il est le plus souvent soit animé d'un mouvement permettant de faire défiler la vendange étalée en couche mince devant les personnes affectées au tri, soit constitué par un plateau vibrant incliné. La bande transporteuse ou le plateau vibrant peuvent être munis de perforations permettant l'égouttage de la couche de vendange en cours de nettoyage se déplaçant vers le moyen de réception de la récolte. Ce mode de tri nécessite la recherche et la disponibilité d'exécutants saisonniers, et il constitue une tâche très absorbante pour ceux-ci, son rendement est très moyen et l'homogénéité de son résultat n'est pas garantie. Bien entendu, de telles tables de tri ne peuvent être embarquées sur des machines à vendanger.

Les tables de tri vibrantes automatiques comportent une table constituée par un plateau perforé soumis à des vibrations permettant un étalement et un mouvement de la vendange, les baies passent à travers les perforations du plateau durant leur déplacement et sont récupérées sous ledit plateau vibrant, par exemple dans une pompe à vendange. Les débris végétaux plus gros que les perforations avancent sous l'effet des vibrations et sont évacués par gravité à l'extrémité aval de la table.

Ces tables de tri vibrantes automatiques ont notamment pour inconvénients :
- un fonctionnement bruyant ;
- un rendement peu élevé nécessitant un contrôle strict des débits des matériels placés en amont de la table de tri (dispositif d'alimentation, égrappoir, etc...) ;
- un résultat plutôt imparfait, compte tenu du fait que les débris de grosseur inférieure à celle des baies peuvent passer à travers les perforations du plateau et ne sont donc pas évacués ;
- de ne pouvoir être embarquées sur une machine à vendanger.

Dans un domaine agricole différent, sont connues des machines de récolte d'olives ou de noix, comportant un système de tri constitué par une succession de rouleaux identiques, parallèles et rapprochés, munis de gorges et de filets hélicoïdaux s'étendant d'une extrémité à l'autre desdits rouleaux. De la sorte, une pluralité d'ouvertures se trouvent ménagées entre deux rouleaux hélicoïdaux voisins, ces ouvertures étant dimensionnées pour permettre le passage et la chute des petits fruits récoltés, tandis que les corps étrangers présentant des dimensions supérieures à celle de la grosseur des fruits « flottent » sur les rouleaux et sont évacués à l'un des bords latéraux de la surface de tri.

Ces dispositifs et leur mode de fonctionnement ont notamment pour inconvénients d'entraîner l'écrasement d'un pourcentage non négligeable de fruits, de laisser passer les pétioles, brindilles et autres débris de forme allongée et de provoquer un déplacement oblique des produits traités en laissant de la sorte une zone de criblage inutilisée et créant une perturbation dans le fonctionnement. Ces dispositifs ne permettent pas non plus l'élimination des corps étrangers présentant une taille inférieure aux dimensions des ouvertures ménagées entre les rouleaux, de sorte que le nettoyage de la récolte reste très imparfait. Pour pallier cet inconvénient, on doit disposer d'un dispositif de criblage constitué par un transporteur sans fin à barreaux fixes rapprochés, séparés par des fentes de faible largeur permettant l'évacuation, par gravité, des débris de petites taille, durant le trajet ascendant de la récolte vers le système de tri. Un tel agencement allonge considérablement le dispositif de tri et écarte toute possibilité de montage sur une machine de récolte telle que machine à vendanger.

Toujours dans un domaine agricole différent (calibrage de pommes de terre), sont connues des machines (DE-1965243) comprenant une pluralité de cylindres profilés disposés en succession, parallèlement les uns aux autres, ces cylindres étant constitués, chacun, par des disques coaxiaux présentant des arêtes coniques, de sorte que chaque cylindre profilé délimite, avec les cylindres adjacents, une pluralité d'ouvertures réglables. Les extrémités des cylindres profilés sont accrochées sur des chaînes sans fin dont la course supérieure est essentiellement horizontale, les rouleaux étant entraînés en rotation au moyen d'une crémaillère lors de leur trajectoire supérieure horizontale. Les cylindres profilés sont ainsi entraînés en translation. Ces machines sont ainsi conçues sous forme d'un tapis calibreur sans fin comportant un brin supérieur calibreur et un brin de retour, ce qui présente notamment pour inconvénients :
- d'être volumineuses, en raison de la nécessité de loger un bac de récupération des produits calibrés entre le brin calibreur supérieur et le brin de retour du tapis sans fin ;
- d'être complexes et coûteuses.

Dans le document EP-0.951.950 est aussi décrite une machine de calibrage de pommes de terre fonctionnant sur le même principe et présentant, en outre, l'inconvénient d'être plus complexe et plus coûteuse.

En outre, les machines de calibrage de produits tels que pommes de terre, décrites dans les documents DE-1.965.243 et EP-0.951.950 ne peuvent être utilisées pour l'élimination des corps étrangers de petites tailles mêlées aux baies de raisin, après l'égrappage de la vendange. On comprend, en effet, que rien n'est prévu pour empêcher ces corps étrangers de petites tailles de passer au travers des ouvertures du tapis sans fin de calibrage, en même temps que les produits calibrés.

L'invention a notamment pour but de remédier à ces inconvénients ou tout au moins d'améliorer sensiblement les résultats obtenus par la mise en oeuvre des matériels connus.

Les objectifs susmentionnés visés par l'invention sont atteints grâce à une table de tri, selon la revendication 1.

Selon un autre mode de réalisation avantageux, les reliefs circulaires des rouleaux trieurs sont munis périphériquement, d'ergots, ou crans, ou bosses, angulairement espacés.

Selon un autre mode d'exécution intéressant, les gorges circulaires sont munies de cannelures angulairement espacées.

L'interstice ou jeu de grandeur réduite ménagé entre les parties qui s'interpénètrent des rouleaux voisins présente, par exemple, une largeur de l'ordre de 2 à 3 mm, de façon à laisser passer uniquement les débris ou déchets de très petite taille (pépins, morceaux de feuilles ou de rafles, petits débris minéraux ou végétaux, etc.). D'autre part, ces rouleaux ameneurs nettoyeurs permettent de positionner les pétioles, brindilles et autres débris de forme allongée perpendiculairement auxdits rouleaux, de sorte qu'ils peuvent être acheminés, dans cette position, jusqu'à l'extrémité aval de la table de tri et ne peuvent se trouver coincés entre les rouleaux.

Les reliefs circulaires des rouleaux ameneurs nettoyeurs sont munis, périphériquement, d'ergots, ou crans, ou bosses, espacés.

Selon un mode d'exécution avantageux, les rouleaux de la table de tri sont montés de manière amovible et interchangeable sur la structure porteuse de ladite table.

Selon une autre disposition caractéristique, les reliefs circulaires et les gorges circulaires des rouleaux ameneurs nettoyeurs et/ ou des rouleaux trieurs sont constitués par des galets successivement enfilés sur un barreau support, chaque galet comprenant un relief circulaire et une demi-gorge disposée de chaque côté dudit relief circulaire, de sorte que les gorges circulaires sont constituées par la jonction de deux galets voisins.

La table de tri selon l'invention procure plusieurs avantages intéressants, notamment :
- une simplicité de fabrication, de fonctionnement et d'entretien ;
- l'obtention d'une qualité de nettoyage remarquable de la récolte ;
- un rendement nettement amélioré par rapport à ceux des dispositifs proposés à ce jour ;
- un fonctionnement silencieux ;
- le flux de la récolte déversée sur la partie amont du plan de tri, sur toute la longueur des rouleaux, se déplace perpendiculairement à l'axe desdits rouleaux et les corps étrangers se trouvent éjectés à l'extrémité aval de la table de tri ;
- elle peut être embarquée sur une machine de récolte de petits fruits, en particulier sur une machine à vendanger, par exemple au-dessus des bennes de réception de la vendange équipant ce type de machine, ou être utilisée à la cave ou autre local de traitement de la récolte.

Selon un mode d'exécution préféré, les galets constituant les rouleaux de la table de tri sont montés de manière amovible et interchangeable sur leur barreau support.

Selon un autre mode d'exécution préféré, les galets sont simplement enfilés sur leur barreau support et sont accouplés en rotation entre eux au moyen de crans et entailles latérales arquées complémentaires, et immobilisés en translation sur ledit barreau support par des moyens de calage qui prennent appui contre les extrémités des alignements de galets.

Suivant une autre disposition caractéristique, les rouleaux ameneurs nettoyeurs et/ ou les rouleaux trieurs sont amovibles et interchangeables.

Selon un mode d'exécution avantageux, l'une des extrémités des barreaux supports des rouleaux ameneurs nettoyeurs et des rouleaux trieurs, est montée sur l'un des côtés de l'ossature porteuse de la table de tri, au moyen d'un axe cylindrique, mobile axialement et engagé, de manière rétractable, dans un alésage axial de ladite extrémité, cet axe rétractable étant assujetti à l'action d'un ressort tendant à le maintenir engagé dans ledit alésage.

Il est ainsi possible de démonter facilement et rapidement chaque rouleau, par exemple pour remplacer ses galets nettoyeurs et/ ou trieurs par des galets présentant des caractéristiques de formes et/ ou de dimensions bien adaptées aux caractéristiques de salissures, ou de formes et/ ou dimensions des petits fruits à trier, ou pour le remplacer par un rouleau complet différent. On peut, de la sorte, adapter la forme et les dimensions des ouvertures de la table de tri en fonction de la taille des baies à traiter.

L'invention concerne également les machines de récolte de petits fruits, selon les revendications 13 à 16, et en particulier les machines à vendanger comportant au moins une table de tri présentant les dispositions caractéristiques susmentionnées.

Selon un mode d'exécution préféré appliqué aux machines munies d'une ou plusieurs bennes de réception de la récolte, la machine de tri est disposée au dessus de l'ouverture supérieure de la ou desdites bennes.

De manière avantageuse, la table de tri est montée de façon basculante, par l'intermédiaire de l'un de ses côtés, sur la benne de réception, afin de permettre le vidage de cette dernière.

Selon un autre exemple de mise en oeuvre intéressant, la table de tri est réalisée en deux parties, soit une partie amont et une partie aval, et l'une de ces parties est montée avec une aptitude de basculement, de sorte à permettre son escamotage et à dégager l'ouverture supérieure de la benne réceptrice, dans les situations où le vigneron souhaite maintenir un certain volume de rafles et de feuilles dans la vendange pour la vinification. Dans ce cas, la vendange peut ne pas être préalablement égrappée.

Les buts, caractéristiques et avantages ci-dessus, et d'autres encore, ressortiront mieux de la description qui suit et des dessins annexés dans lesquels :
La figure 1A est une vue en plan d'un premier exemple de réalisation de la table de tri selon l'invention.
La figure 2A est une vue de côté considérée selon la flèche A de la figure 1A.

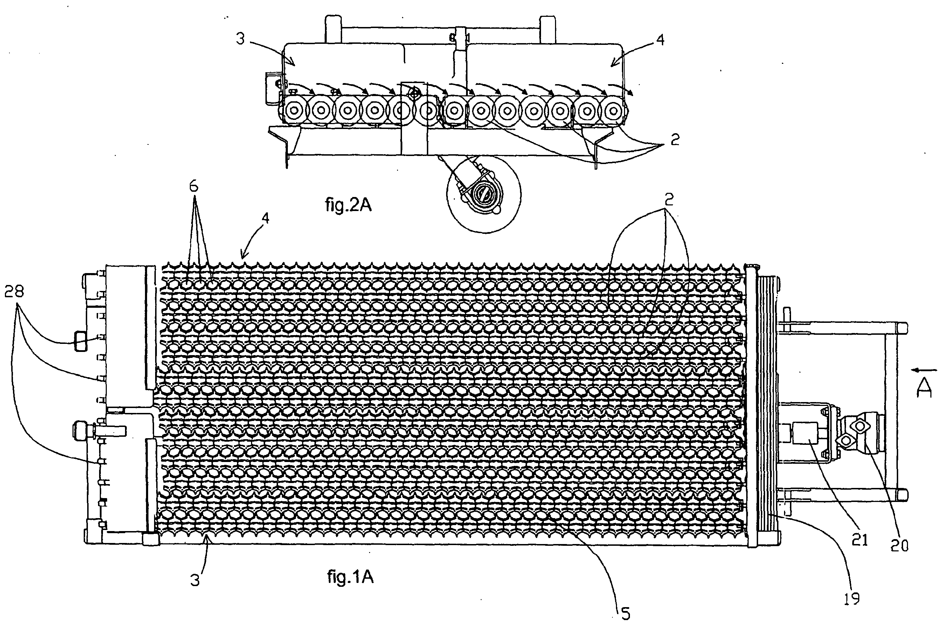

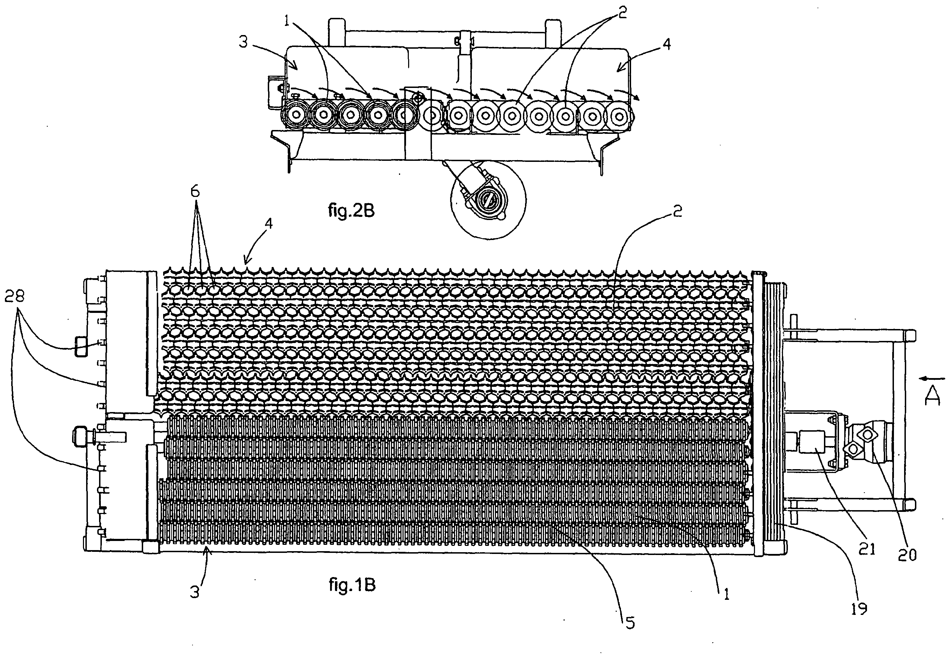

La figure 1B est une vue en plan d'un deuxième exemple préféré de réalisation de la table de tri selon l'invention.
La figure 2B est une vue de côté considérée suivant la flèche A de la figure 1B.

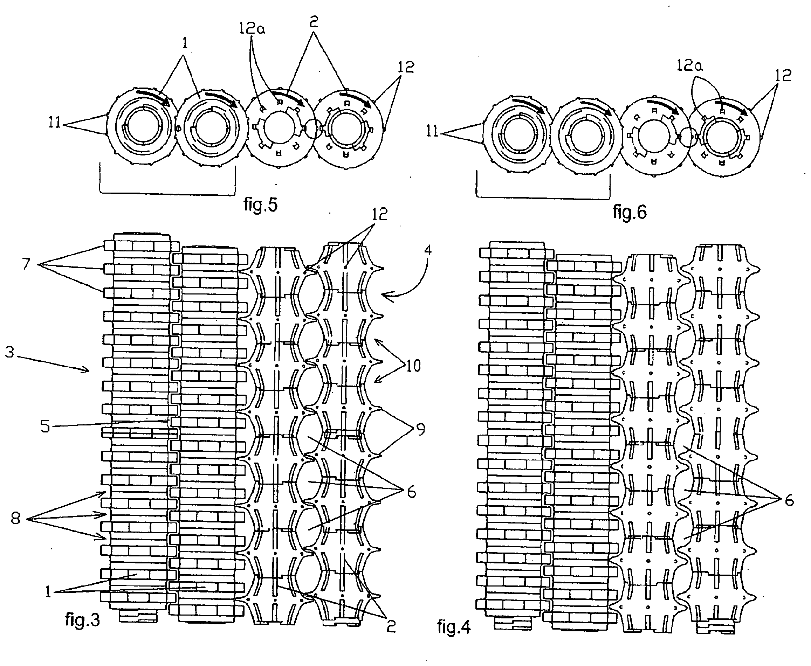

Les figures 3 et 4 sont deux vues partielles analogues, en plan et à échelle agrandie, de la table de tri, représentée aux figures 1B et 2B.
Les figures 5 et 6 sont des vues de côté des figures 3 et 4, respectivement.

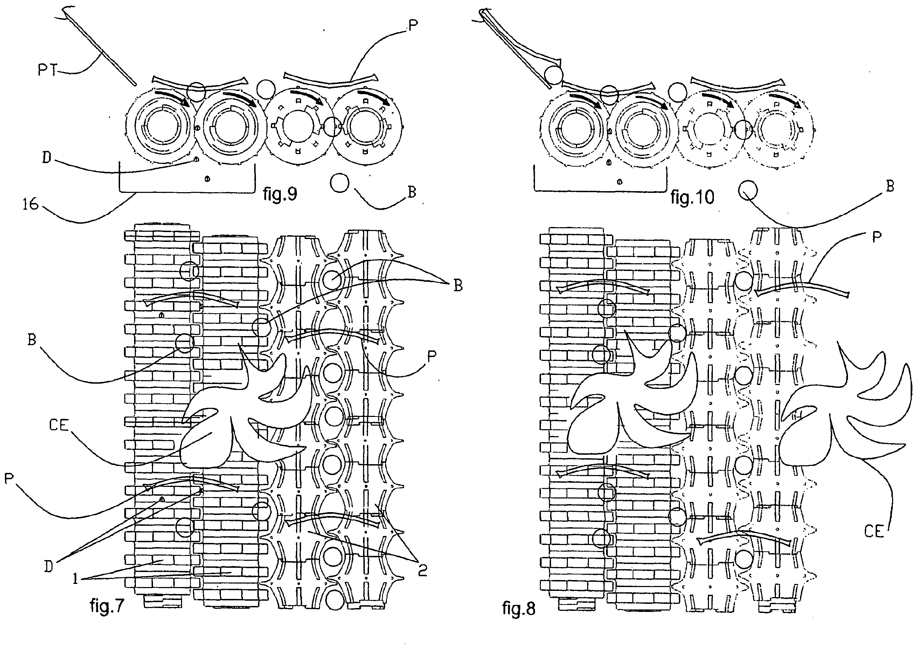

Les figures 7 à 10 sont des vues correspondantes aux figures 3 à 6, respectivement, et illustrant la table de tri à rouleaux trieurs en cours de fonctionnement.

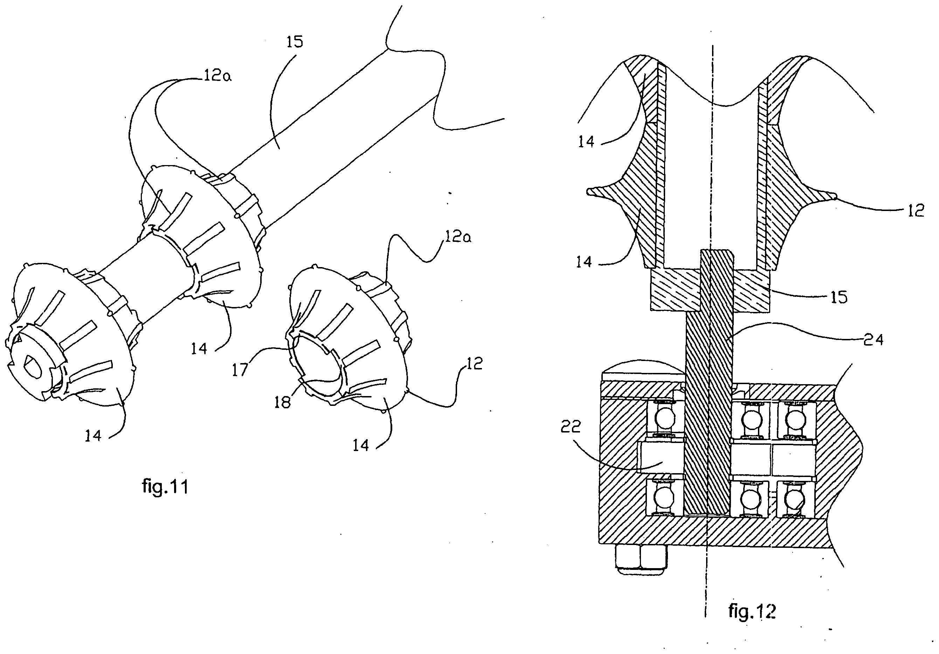

La figure 11 est une vue de détail, éclatée, montrant plus particulièrement les moyens d'accouplement des galets.
La figure 12 est une vue en coupe axiale illustrant les galets en position d'accouplement.

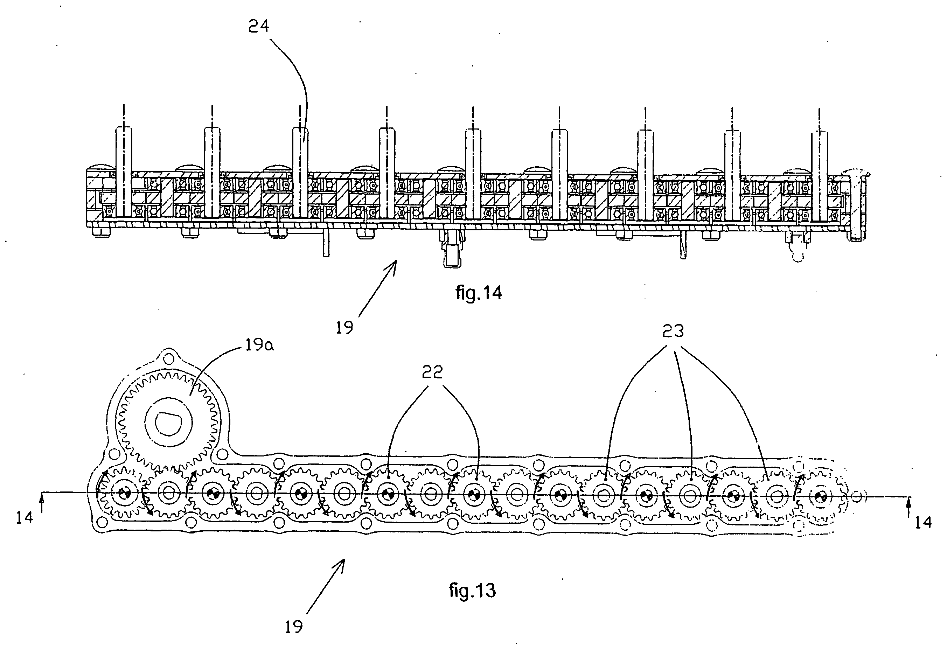

La figure 13 est une vue de face d'un exemple de réalisation d'un boîtier de transmission permettant l'entraînement, dans le même sens de rotation, de l'ensemble des rouleaux de la table de tri.
La figure 14 est une vue en coupe selon la ligne 14-14 de la figure 13.

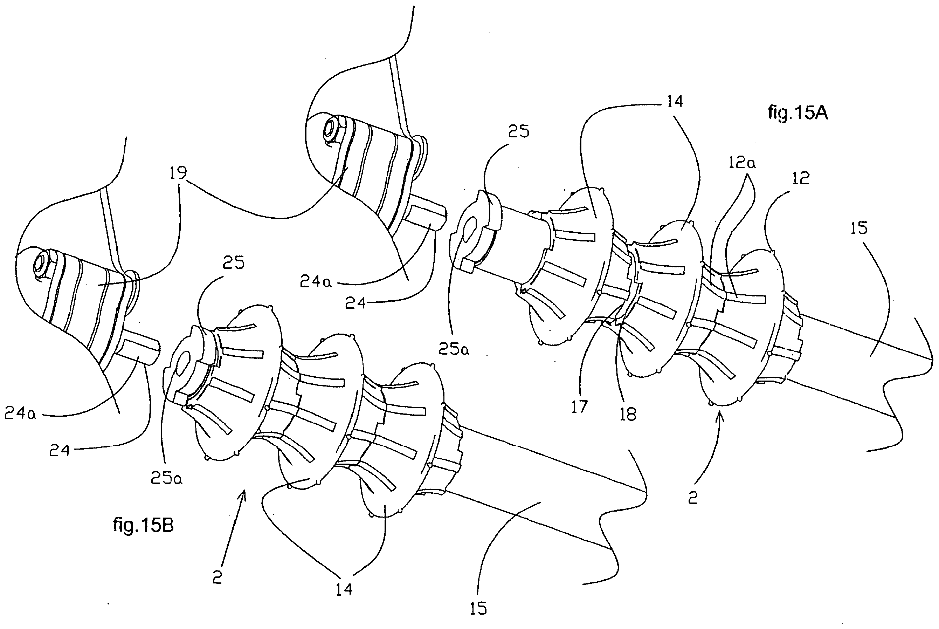

Les figures 15A et 15B illustrent les moyens d'accouplement des rouleaux rotatifs à l'axe des pignons d'entraînement du boîtier de transmission.

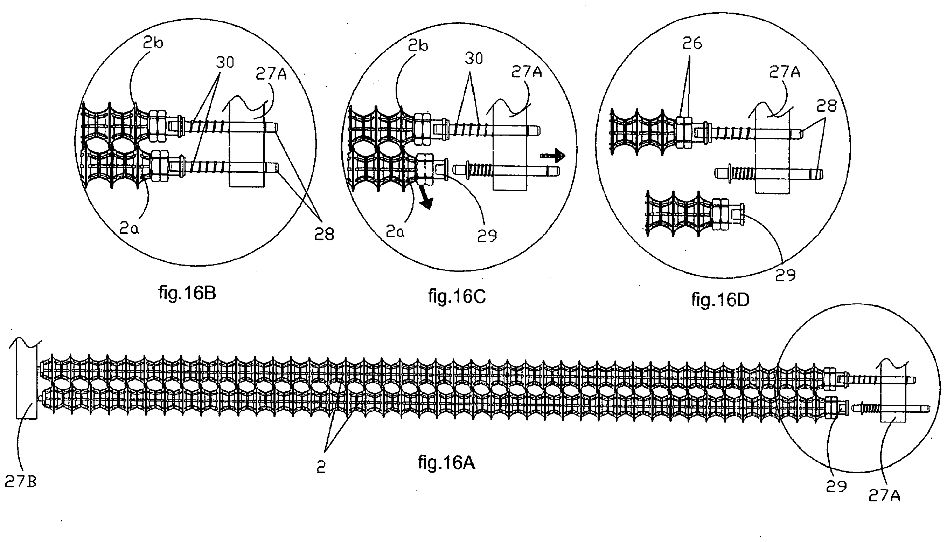

Les figures 16A à 16D représentent un exemple de réalisation des moyens de montage amovible des rouleaux.

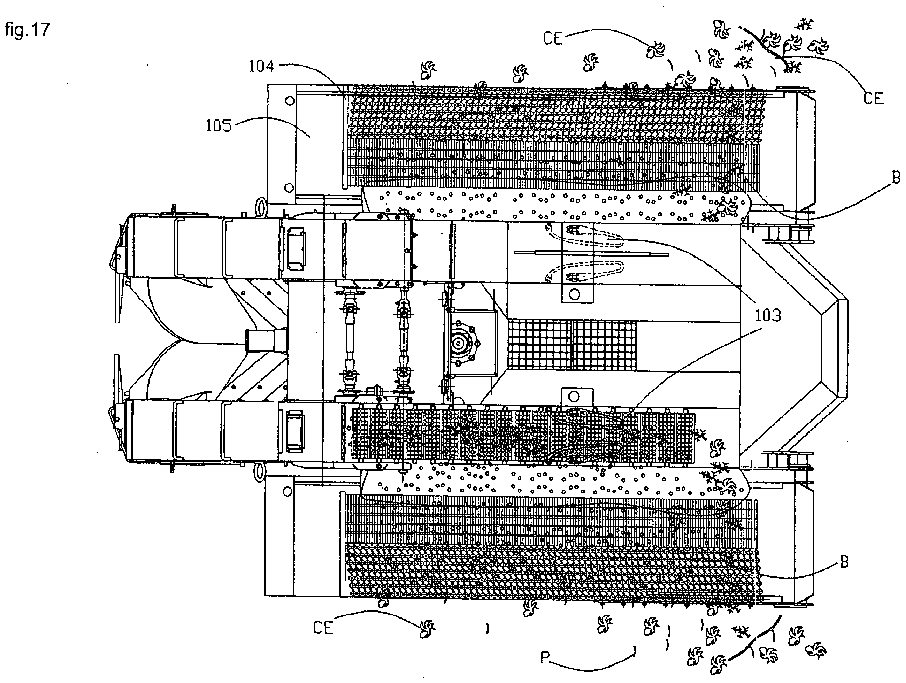

La figure 17 est une vue de dessus d'une machine à vendanger équipée de deux tables de tri installées au-dessus de ses bennes réceptrices.

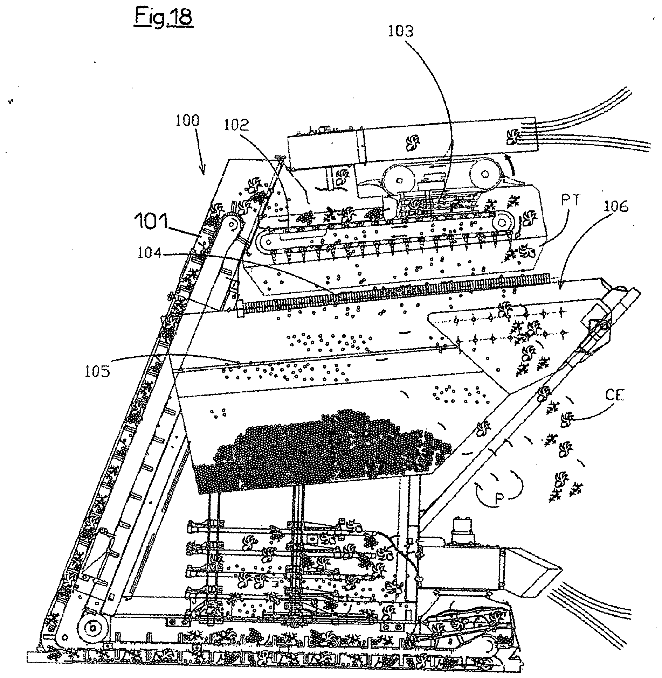

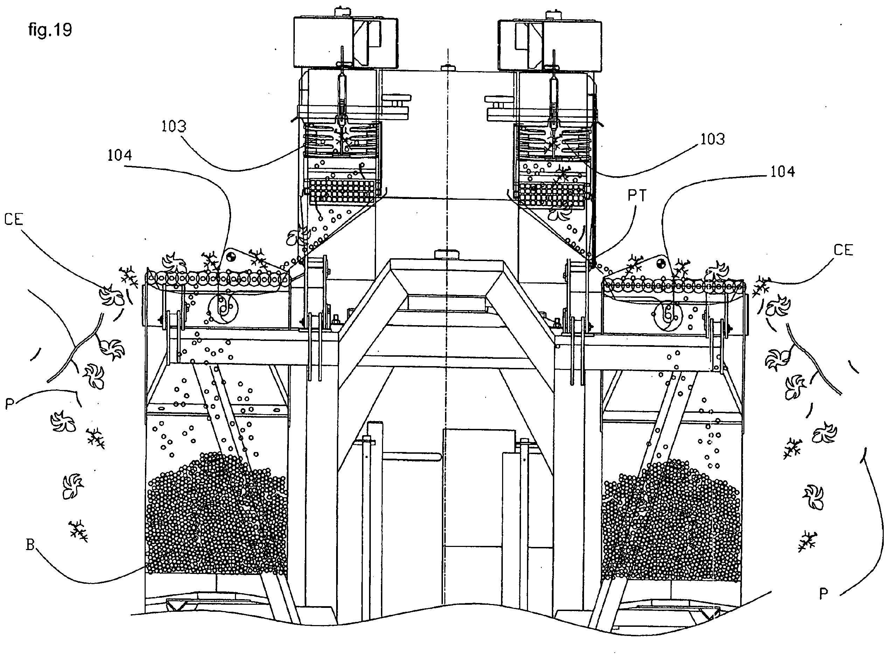

Les figures 18 et 19 sont, respectivement, des vues de côté et arrière de cette machine.

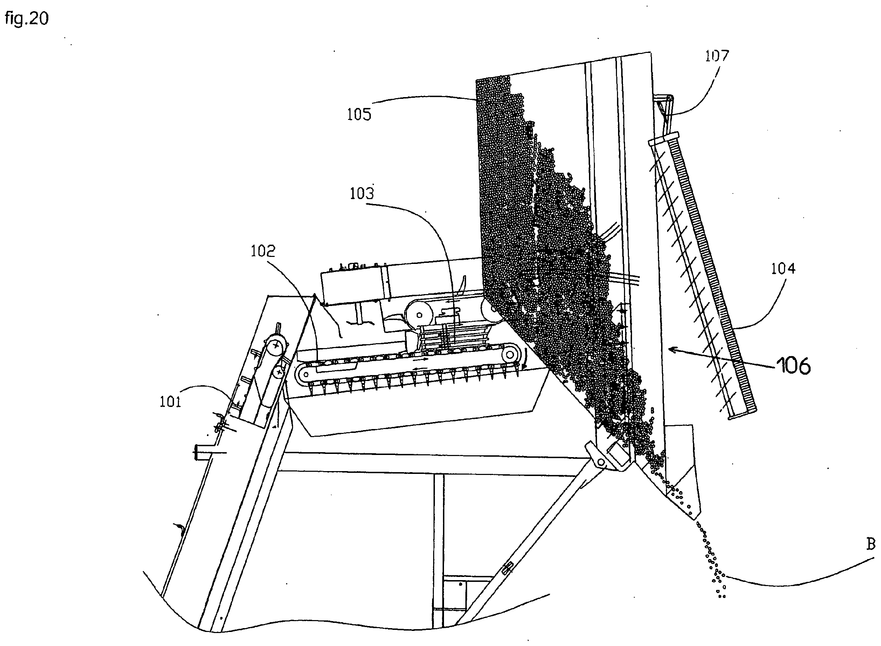

La figure 20 est une vue de côté partielle d'une machine à vendanger illustrant le vidage d'une benne.

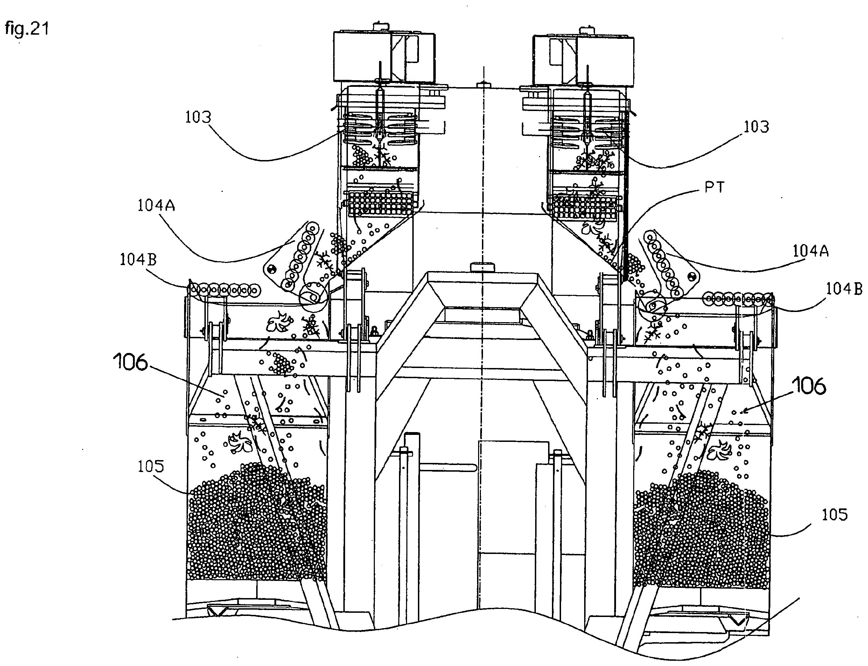

La figure 21 est une vue arrière partielle d'une machine à vendanger, illustrant l'escamotage de la partie amont de la table de tri, pour permettre la conservation d'un certain volume de rafles et feuilles dans la récolte déversée dans les bennes.

On se réfère auxdits dessins pour décrire des exemples de réalisation intéressants, bien que nullement limitatifs, de la table de tri à rouleaux trieurs selon l'invention, ainsi que d'une machine à vendanger comportant de telles tables de tri.

Selon le mode de réalisation illustré aux figures 1B, 2B et 3 à 10, le système trieur de la table de tri est constitué par une succession de rouleaux rotatifs adjacents de forme générale cylindrique 1, 2, disposés parallèlement, de sorte à former un plan de tri comportant une partie amont 3 et une partie aval 4. Les rouleaux 1, 2 sont entraînés en rotation dans le même sens par des moyens décrits ci-après et ils sont séparés par des interstices 5 (rouleaux 1), ou par des ouvertures 6 (rouleaux 2). Selon une dispositif caractéristique de l'invention, ils sont immobilisés en translation.

Ces rouleaux rotatifs sont agencés et disposés de sorte à permettre, dans un premier temps et dans la partie amont du plan de tri (rouleaux 1), le passage et la chute des corps étrangers de taille inférieure à celle des baies de raisin à trier seulement, et, dans un deuxième temps, le passage et la chute des baies de raisin seulement, dans la partie restante ou partie aval dudit plan de tri (rouleaux 2) ; les corps étrangers de taille supérieure à celle des baies de raisin restant à la surface du plan de tri mobile et étant évacués à l'extrémité aval de celui-ci.

Dans la description et dans les revendications relatives au mode d'exécution montré aux figures 1B, 2B et 3 à 10, les rouleaux 1 constituent la partie amont 3 du plan de tri sont appelés « rouleaux ameneurs nettoyeurs » en relation avec leur fonction double qui est d'orienter les déchets de forme allongée perpendiculairement à l'axe de rotation desdits rouleaux pour les acheminer, dans cette position, jusqu'à l'ensemble des rouleaux 2, tout en permettant l'évacuation des petits débris ou déchets, tandis que les rouleaux 2 constituant la partie aval 4 dudit plan de tri sont appelés « rouleaux trieurs » en rapport avec leur fonction qui est de séparer les baies des corps étrangers, devant être éliminés.

Selon ce mode d'exécution, les rouleaux ameneurs nettoyeurs rotatifs 1 constituant la partie amont 3 du plan de tri comportent une succession de reliefs circulaires 7 séparés par des gorges circulaires 8 et sont positionnés de sorte que les reliefs circulaires de ces rouleaux soient imbriqués dans les gorges circulaires 8 du ou des rouleaux voisins, un interstice ou jeu 5 de grandeur réduite étant ménagé entre les parties qui s'interpénètrent des rouleaux voisins, cet interstice présentant, par exemple, une largeur de l'ordre de 2 à 3 mm, de façon à laisser passer uniquement les débris ou déchets de très petite taille (pépins, petits débris minéraux ou végétaux, etc....).

Les figures 3 et 4 montrent l'interstice ou jeu 5 en forme de chicane ménagé entre deux rouleaux ameneurs nettoyeurs 1 voisins.

D'autre part, les rouleaux trieurs rotatifs 2, constituant la partie restante ou partie aval du plan de tri présentent également une succession de reliefs circulaires 9 séparés par des gorges circulaires 10, ces reliefs circulaires comportant une crête ou arête circulaire médiane se raccordant au fond des gorges par une surface concave, de préférence arquée, lesdits rouleaux étant positionnés de sorte que leurs gorges circulaires forment, avec les gorges du ou des rouleaux voisins, une pluralité d'ouvertures 6 de forme ronde ou approximativement ronde et dimensionnées pour permettre le passage des petits fruits à trier seulement.

Les figures 3 et 4 montrent les ouvertures 6 ménagées entre deux rouleaux trieurs 2 voisins, ces ouvertures ayant des dimensions différentes sur lesdites figures, ces dimensions étant choisies en fonction de la grosseur des baies à traiter.

Les reliefs circulaires 9 de chaque rouleau trieur 2 sont légèrement décalés par rapport aux reliefs circulaires 9 du ou des rouleaux circulaires voisins et leurs bords adjacents amincis sont engagés dans les gorges 10 ou desdits rouleaux voisins, tout en permettant la formation des ouvertures 6, comme on le voit notamment sur les figures 3 et 4.

Selon une autre importante disposition caractéristique, les reliefs circulaires 7, 9 des rouleaux nettoyeurs 1 et des rouleaux trieurs 2 sont munis, périphériquement, d'ergots, ou crans, ou bosses 11, 12, respectivement, angulairement espacées.

Ces ergots, ou crans, ou bosses, contribuent grandement à assurer la bonne orientation et le bon acheminement des corps étrangers au-dessus du plan de tri, jusqu'à l'extrémité aval d'éjection de celui-ci.

D'autre part, selon une autre disposition intéressante, les gorges circulaires 10 des rouleaux trieurs 2 sont munies de cannelures angulairement espacées 12a (figure 15A).

De la sorte, les produits de la récolte déversés sur la partie amont 3 de la table de tri se déplacent en sautillant durant leur trajet en direction de l'extrémité déversante de cette dernière, ce sautillement favorisant le passage d'un rouleau à un autre et assurant le maintien des corps étrangers au-dessus du plan de tri, tandis que les baies passent au travers des ouvertures de celui-ci.

Grâce à l'agencement décrit ci-dessus, lorsque la vendange est déversée, après égrappage, sur la partie amont 3 du plan de tri, par exemple par glissement sur un plan incliné ou déflecteur D, elle est d'abord convoyée en direction de la partie aval de celui-ci, par les rouleaux nettoyeurs ameneurs 1. Lors de cette première phase : - les petits corps étrangers P (pépins, débris végétaux et minéraux,...) et le jus passent à travers les interstices 5 et tombent dans un bac ajouré 16 (figures 9 et 10) disposé au-dessous desdits rouleaux et permettant la récupération du jus ; - les débris de forme allongée PT (pétioles, brindilles, morceaux de sarments,....) sont orientés perpendiculairement à l'axe des rouleaux 1 et 2 dès leur entrée en contact avec les rouleaux et convoyés dans cette position avec la vendange ainsi débarrassée de ses petits corps étrangers, en direction des rouleaux trieurs 2. Lors de cette deuxième phase, les baies de raisin B passent à travers les ouvertures 6 ménagées entre les rouleaux trieurs 2 et sont récupérées dans une benne (si la table de tri est embarquée sur une machine à vendanger) ou dans une pompe à vendange (si la table de tri est installée à poste fixe) placée sous les rouleaux trieurs 2. Les corps étrangers CE tels que les feuilles, morceaux de sarments ou de rafles, etc, « flottent » sur les rouleaux trieurs 2 et sont convoyés jusqu'à l'extrémité aval de la table de tri où ils sont éjectés de cette dernière.

Selon une autre disposition caractéristique, les reliefs circulaires 7, 9 et les gorges circulaires 8, 10 des rouleaux nettoyeurs 1 et des rouleaux trieurs 2 sont constitués par une succession de galets 13, 14 comprenant un relief circulaire 7, 8 et une demi-gorge 8, 10 placée de chaque côté dudit relief circulaire, de sorte que les gorges circulaires 8, 10 sont constituées par l'association de deux galets voisins.

Selon un mode d'exécution préféré, les galets 13, 14 sont simplement enfilés sur un barreau 15 et sont accouplés en rotation entre eux au moyen de crans 17 et entailles 18 latérales arquées complémentaires dont sont munis latéralement lesdits galets, ces derniers étant immobilisés en translation sur ledit barreau.

Cet agencement est illustré aux figures 11, 12, 15A et 15B, en ce qui concerne les galets 14 des rouleaux trieurs 2 seulement, étant donné que les galets 13 des rouleaux nettoyeurs ameneurs 1 sont dotés de moyens de montage et d'accouplement identiques.

La mise en rotation, dans le même sens, de l'ensemble des rouleaux 1, 2 de la table de tri, peut être réalisée au moyen d'un système d'entraînement comprenant un boîtier de transmission en ligne 19, illustré aux figures 13 et 14. Ce boîtier de transmission est accouplé à un moteur d'entraînement 20, par exemple, par l'intermédiaire d'un accouplement élastique 21. Il est essentiellement constitué par un train ou succession de pignons d'entraînement 22 entre lesquels sont interposés des pignons intermédiaires 23.

Chaque pignon d'entraînement 22 de ce boîtier de transmission 19 est solidaire d'un axe 24 par l'intermédiaire duquel il peut être accouplé, de manière démontable, à un barreau 15. Chaque barreau 15 est muni, dans l'une de ses parties terminales, d'une pièce d'accouplement à griffes 25 par l'intermédiaire de laquelle il est assemblé en rotation, de manière démontable, au galet 13 ou 14 placé en bout d'un alignement de galets 13 ou 14 accouplés en rotation entre eux. Le train de pignons 22-23 est entraîné en rotation par un pignon moteur 19a lui-même entraîné par le moteur 20. Les axes d'entraînement 24 des pignons 22 comportent un méplat 24a s'engageant dans un trou axial 25a de forme complémentaire que présente la pièce d'accouplement à griffes 25.

Bien entendu, il est possible de réaliser l'entraînement en rotation des rouleaux 1 et 2, autrement que par l'intermédiaire d'un engrenage, par exemple au moyen d'une chaîne ou d'une courroie, crantée ou non.

La portion terminale opposée de chaque arbre 15 est munie d'un moyen tel que, par exemple, un système d'écrou et contre-écrou 26 se vissant sur un filetage de ladite portion terminale, et permettant de presser les galets 13, 14 les uns contre les autres, en position d'accouplement, de sorte à s'opposer à tout mouvement axial et désaccouplement desdits galets.

Les rouleaux ameneurs nettoyeurs 1 et les rouleaux trieurs 2 sont montés de manière amovible et interchangeable sur l'ossature porteuse de la table de tri, cette disposition étant particulièrement intéressante en ce qui concerne le montage des rouleaux trieurs. En effet, la fixation rapidement démontable de ces derniers, pour les remplacer par des rouleaux permettant de créer des ouvertures 6 de dimension différente, autorise le triage de fruits de taille différente, soit en fonction de la grosseur des baies, soit pour obtenir des baies triées de grosseur progressive.

Un exemple de réalisation du montage amovible des rouleaux 1 et 2 est représenté aux figures 16A à 16D, ce montage étant illustré avec référence aux rouleaux trieurs 2 seulement, étant donné qu'il peut être identique pour les rouleaux ameneurs nettoyeurs 1.

Selon cet exemple, ie côté 27A de la structure porteuse, à l'opposé du côté 27B de celle-ci qui soutient le boîtier de transmission 19, supporte une pluralité d'axes rétractables 28 engagés dans un alésage 29 que présente l'extrémité des barreaux 15. Ces axes rétractables 29 sont soumis à l'action d'un moyen élastique tendant à les repousser en position d'accouplement. Ce moyen élastique est, par exemple, constitué par un ressort hélicoïdal 30 agissant en compression, disposé autour de l'axe 28 et calé, entre une rondelle 31 fixée sur la portion interne dudit axe et le côté 27B de la structure porteuse.

La figure 16B montre deux rouleaux 2a, 2b en position de montage sur le côté 27A de la structure porteuse; les figures 16C et 16D montrent le retrait de l'axe rétractable 28 de l'extrémité du rouleau 2a, à l'encontre de l'action antagoniste du ressort 30, et la figure 16F montre l'enlèvement de ce rouleau.

L'invention couvre également les machines de récolte de baies de raisin et, plus particulièrement, les machines à vendanger comportant une table de tri à rouleaux présentant les caractéristiques précédemment décrites.

Selon un mode d'exécution préféré applicable aux machines de récolte munies d'une ou plusieurs bennes de réception des baies, une table de tri à rouleaux est disposée au-dessus de l'ouverture supérieure de la ou desdites benne(s) de réception.

Les figures 17 à 21 montrent une machine à vendanger 100 comportant, sur chacun des côtés de son plan longitudinal médian de travail, un convoyeur élévateur 101 permettant de déverser la vendange brute sur un tapis transporteur ajouré 102, par exemple du genre décrit dans le document FR- 2 795 599 permettant l'extraction du jus et des baies détachées des rafles, et au-dessus de la partie aval duquel est installé un égrappoir 103. Une table de tri à rouleaux selon l'invention, désignée dans son ensemble par la référence 104 et comportant les caractéristiques techniques décrites précédemment, est disposée au-dessus de l'ouverture supérieure 106 des bennes réceptrices 105. Les baies B détachées des rafles par l'égrappoir 103, et le jus, passent dans les ouvertures 6 de la table de tri et sont réceptionnées dans la benne 105 sous-jacente tandis que les corps étrangers CE (rafles, feuilles, morceaux de sarments et autres) sont rejetés sur les côtés de la machine.

Selon un mode d'exécution avantageux, les tables de tri 104 sont montées basculantes, par l'intermédiaire de l'un de leur côté, sur les bennes réceptrices 105, afin de permettre de dégager l'ouverture supérieure 106 desdites bennes et le vidage de celles-ci (figure 20). Ce basculement peut être obtenu par tout système motorisé convenable, par exemple au moyen d'un vérin ou facilité, par exemple par le montage d'un vérin à gaz 107.

Selon un autre mode d'exécution intéressant, la table de tri 104 est réalisée en deux parties 104A, 104B, l'une (104A) de ses parties étant montée avec une aptitude de basculement par rapport à l'autre (104B), de sorte que lorsque ladite table de tri est installée au-dessus de l'ouverture supérieure 106 d'une benne réceptrice 105, elle peut être basculée en position d'escamotage, de sorte à permettre le déversement direct dans ladite benne, de baies de raisin mêlées à des feuilles et à des rafles, lorsque la nature des cépages et les procédés de vinification rendent souhaitable la non séparation de celles-ci.

## Revendications

1. Table de tri à rouleaux trieurs pour l'élimination des corps étrangers (P, PT, CE) restant mêlés aux baies de raisin (B) après l'égrappage de la vendange, lesdits corps étrangers comprenant des petits corps étrangers (P) de très petite taille inférieure à celle des baies de raisin (B), des débris de forme allongée (PT) et des corps étrangers (CE) de taille supérieure à celle des baies de raisin (B), ladite table comportant un système trieur constitué par une succession de rouleaux rotatifs adjacents de forme générale cylindrique (1, 2) disposés parallèlement de sorte à former un plan de tri, comportant une partie amont (3) et une partie aval (4), la partie amont (3) étant constituée par des rouleaux ameneurs-nettoyeurs (1) et la partie aval (4) par des rouleaux trieurs (2), et des moyens moteurs (19, 20) permettant l'entraînement en rotation de l'ensemble des rouleaux (1, 2) de la table de tri dans le même sens, de sorte à permettre un déplacement de la vendange déversée sur la partie amont (3) de ce plan de tri, dans une direction perpendiculaire à l'axe desdits rouleaux trieurs (2) et sur toute la longueur dudit plan de tri, lesdits rouleaux ameneurs-nettoyeurs (1) comportant une succession de reliefs circulaires (7) séparés par des gorges circulaires (8) et munis, périphériquement, d'ergots, ou crans, ou bosses espacés, lesdits rouleaux ameneurs-nettoyeurs (1) étant immobilisés en translation et positionnés de sorte que leurs reliefs circulaires (7) soient imbriqués dans les gorges (8) du ou des rouleaux voisins, un interstice ou jeu (5) de grandeur réduite étant ménagé entre les parties qui s'interpénètrent des rouleaux voisins, de façon à laisser passer uniquement les petits corps étrangers (P), lesdits rouleaux ameneurs-nettoyeurs permettant d'orienter les débris de forme allongée (PT) perpendiculairement à l'axe de rotation desdits rouleaux pour les acheminer, dans cette position, jusqu'auxdits rouleaux trieurs, lesdits rouleaux trieurs (2) étant immobilisés en translation dans ladite direction perpendiculaire à l'axe desdits rouleaux rotatifs et agencés de manière à ménager une pluralité d'ouvertures (6) entre deux rouleaux trieurs (2) voisins, de sorte à permettre, le passage et la chute des baies de raisin (B) à trier seulement, les corps étrangers (CE) de taille supérieure à celle de ces dernières restant à la surface du plan de tri mobile étant évacués avec les débris de forme allongée (PT) à l'extrémité aval de celui-ci, lesdits rouleaux trieurs (2) présentant une succession de reliefs circulaires (9) séparés par des gorges circulaires (10), ces reliefs circulaires comportant une crête ou arête circulaire médiane se raccordant au fond des gorges (10) par une surface concave, lesdits rouleaux trieurs (2) étant positionnés de sorte que les gorges circulaires (10) de ces rouleaux forment, avec les gorges circulaires du ou des rouleaux voisins, lesdites ouvertures (6), les reliefs circulaires (9) de chaque rouleau trieur (2) étant légèrement décalés par rapport aux reliefs circulaires (9) du ou des rouleaux trieurs voisins (2) et leurs bords adjacents étant partiellement engagés dans les gorges (10) du ou desdits rouleaux voisins, de sorte à délimiter lesdites ouvertures (6).

2. Table de tri à rouleaux trieurs selon la revendication 1, **caractérisée en ce que** les reliefs circulaires (9) des rouleaux trieurs (2) sont munis périphériquement d'ergots, ou crans, ou bosses (12) espacés.

3. Table de tri à rouleaux trieurs selon la revendication 1, **caractérisée en ce que** les gorges circulaires (10) des rouleaux trieurs (2) sont munies de cannelures angulairement espacées (12a).

4. Table de tri à rouleaux trieurs selon l'une quelconque des revendications 1 à 3, **caractérisée en ce que** les rouleaux (1, 2) sont montés de manière amovible et interchangeable sur la structure porteuse (27A-27B) de la table.

5. Table de tri à rouleaux trieurs selon l'une quelconque des revendications 1 à 4, **caractérisée en ce que** les reliefs circulaires (7, 9) et les gorges circulaires (8, 10) des rouleaux ameneurs-nettoyeurs (1) et/ou des rouleaux trieurs (2), sont constitués par des galets (13, 14) successivement enfilés sur un barreau support (15), chaque galet comprenant un relief circulaire (7, 9) et une demi-gorge circulaire (8, 10) disposée de chaque côté dudit relief circulaire, de sorte que lesdites gorges circulaires sont constituées par la jonction de deux galets voisins (13-13, 14-14).

6. Table de tri à rouleaux trieurs selon la revendication 5, **caractérisée en ce que** les galets (13, 14) constituant les rouleaux de la table de tri sont montés de manière amovible et interchangeable sur leur barreau support (15).

7. Table de tri à rouleaux trieurs selon l'une des revendications 5 ou 6. **caractérisée en ce que** les galets (13, 14) sont simplement enfilés sur leur barreau support (15) et sont accouplés en rotation entre eux au moyen de crans (17) et entailles (18) latérales arquées complémentaires, dont sont munis lesdits galets (13, 14), et immobilisés en translation sur ledit barreau support (15).

8. Table de tri à rouleaux trieurs selon l'une quelconque des revendications 4 à 7, **caractérisée en ce que** l'une des extrémités des barreaux supports (15) des rouleaux ameneurs-nettoyeurs (1) et/ou des rouleaux trieurs (2) est montée au moyen d'un axe (28), mobile axialement et engagé de manière rétractable dans un alésage axial (29) de ladite extrémité, cet axe rétractable (28) étant assujetti à l'action d'un ressort (30) tendant à le maintenir engagé dans ledit alésage (29).

9. Machine à vendanger, **caractérisée en ce qu'**elle comporte au moins une table de tri à rouleaux (104) réalisée selon l'une quelconque des revendications 1 à 8.

10. Machine à vendanger, selon la revendication 9, du genre muni d'une ou plusieurs bennes (105) de réception de la récolte, **caractérisée en ce qu'**une table de tri à rouleaux est disposée au-dessus de l'ouverture supérieure (106) de la ou lesdites bennes (105).

11. Machine à vendanger, selon la revendication 10, **caractérisée en ce que** la table de tri ou chaque table de tri (104) est montée avec une aptitude de basculement, par l'intermédiaire de l'un de ses côtés, sur la benne de réception (105) sous-jacente.

12. Machine à vendanger, selon l'une des revendications 9 ou 10, **caractérisée en ce que** la table de tri ou chaque table de tri (104) est réalisée en deux parties, soit une partie aval (104A) et une partie amont (104B). et l'une (104A) de ces parties est montée avec une aptitude de basculement, de sorte à permettre son escamotage et à dégager l'ouverture supérieure (106) de la benne réceptrice sous-jacente (105).

## Patentansprüche

1. Sortiertisch mit Sortierrollen zum Entfernen von Fremdkörpern (P, PT, CE), die nach dem Abbeeren des Weinleseguts mit den Weinbeeren (B) vermischt bleiben, wobei die Fremdkörper kleine Fremdkörper (P) von sehr kleiner Größe von weniger als der der Weinbeeren (B), länglich geformte Rückstände (PT) und Fremdkörper (CE), die größer als die Weinbeeren (B) sind, umfassen, wobei der Tisch ein Sortiersystem umfasst, das aus einer Aufeinanderfolge von sich drehenden, nebeneinanderliegenden Rollen mit allgemein zylindrischer Form (1, 2) gebildet wird, die parallel so angeordnet sind, dass sie Sortierebene bilden, die einen vorgelagerten Teil (3) und einen nachgelagerten Teil (4) umfasst, wobei der vorgelagerte Teil (3) aus Mitnehmer-/ Reinigungsrollen (1) und der nachgelagerte Teil (4) aus Sortierrollen (2) gebildet wird, und Motormittel (19, 20), die den Drehantrieb der Rollenbaugruppe (1, 2) des Sortiertischs in derselben Richtung gestatten, so dass eine Bewegung des auf den vorgelagerten Teil (3) dieser Sortierebene geschütteten Weinleseguts in einer Richtung senkrecht zur Achse der Sortierrollen (2) und über die gesamte Länge der Sortierebene ermöglicht wird, wobei die Mitnehmer-/ Reinigungsrollen (1) eine Aufeinanderfolge von kreisförmigen Erhöhungen (7) aufweisen, die durch kreisförmige Auskehlungen (8) getrennt und an ihrem Umfang mit voneinander beabstandeten Nocken oder Zacken oder Höckern ausgestattet sind, wobei die Mitnehmer-/ Reinigungsrollen (1) translatorisch unbeweglich sind und so positioniert sind, dass ihre kreisförmigen Erhöhungen (7) in die Auskehlungen (8) der benachbarten Rolle bzw. Rollen eingreifen, wobei ein Zwischenraum oder Spielraum (5) von kleiner Größe zwischen den Teilen, die in die benachbarten Rollen eingreifen, ausgespart ist, so dass nur kleine Fremdkörper (P) durchgelassen werden, wobei die Mitnehmer-/ Reinigungsrollen es gestatten, die länglich geformten Rückstände (PT) senkrecht zur Drehachse der Rollen auszurichten, um sie in dieser Position den Sortierrollen zuzuführen, wobei die Sortierrollen (2) in der zur Achse der Drehrollen senkrechten Richtung translatorisch unbeweglich sind und so angeordnet sind, dass zwischen zwei benachbarten Sortierrollen (2) eine Mehrzahl von Öffnungen (6) ausgespart ist, so dass das Durchlassen und Hindurchfallen nur der zu sortierenden Weinbeeren (B) gestattet wird, wobei die Fremdkörper (CE) von einer größeren Größe als der der Letzteren, die auf der Oberfläche der beweglichen Sortierebene bleiben, mit den länglich geformten Rückständen (PT) an deren nachgelagertem Ende abgeführt werden, wobei die Sortierrollen (2) eine Aufeinanderfolge von kreisförmigen Erhöhungen (9) aufweisen, die durch kreisförmige Auskehlungen (10) getrennt sind, wobei diese kreisförmigen Erhöhungen einen Kamm oder kreisförmigen Mittelgrat aufweisen, der sich über eine konkave Oberfläche an den Boden der Auskehlungen (10) anschließt, wobei die Sortierrollen (2) so positioniert sind, dass die kreisförmigen Auskehlungen (10) dieser Rollen mit den kreisförmigen Auskehlungen der benachbarten Rolle bzw. Rollen die Öffnungen (6) bilden, wobei die kreisförmigen Erhöhungen (9) jeder Sortierrolle (2) zu den kreisförmigen Erhöhungen (9) der benachbarten Sortierrolle bzw. Sortierrollen (2) leicht versetzt sind und wobei ihre nebeneinanderliegenden Kanten teilweise in die Auskehlungen (10) der benachbarten Rolle bzw. Rollen eingreifen, so dass sie die Öffnungen (6) begrenzen.

2. Sortiertisch mit Sortierrollen nach Anspruch 1, **dadurch gekennzeichnet, dass** die kreisförmigen Erhöhungen (9) des Sortierrollen (2) an ihrem Umfang mit voneinander beabstandeten Nocken oder Zacken oder Höckern (12) ausgestattet sind.

3. Sortiertisch mit Sortierrollen nach Anspruch 1, **dadurch gekennzeichnet, dass** die kreisförmigen Auskehlungen (10) der Sortierrollen (2) mit im Winkel beabstandeten Rillen (12a) ausgestattet sind.

4. Sortiertisch mit Sortierrollen nach einem der Ansprüche 1 bis 3, **dadurch gekennzeichnet, dass** die Rollen (1, 2) abnehmbar und austauschbar an der Tragstruktur (27A - 27B) des Tischs angebracht sind.

5. Sortiertisch mit Sortierrollen nach einem der Ansprüche 1 bis 4, **dadurch gekennzeichnet, dass** die kreisförmigen Erhöhungen (7, 9) und die kreisförmigen Auskehlungen (8, 10) der Mitnehmer-/ Reinigungsrollen (1) und/oder der Sortierrollen (2), von Laufrollen (13, 14) gebildet werden, die nacheinander auf einer Tragstange (15) aufgereiht sind, wobei jede Laufrolle eine kreisförmige Erhöhung (7, 9) und eine kreisförmige Halbauskehlung (8, 10) umfasst, die zu beiden Seiten der kreisförmigen Erhöhung angeordnet ist, so dass die kreisförmigen Auskehlungen durch die Verbindung von zwei benachbarten Laufrollen (13-13, 14-14) gebildet werden.

6. Sortiertisch mit Sortierrollen nach Anspruch 5, **dadurch gekennzeichnet, dass** die Laufrollen (13, 14), die die Rollen des Sortiertischs bilden, abnehmbar und austauschbar an ihrer Tragstange (15) angebracht sind.

7. Sortiertisch mit Sortierrollen nach einem der Ansprüche 5 oder 6, **dadurch gekennzeichnet, dass** die Laufrollen (13, 14) einfach auf ihrer Tragstange (15) aufgereiht sind und mithilfe von Zacken (17) und seitlichen, gebogenen, komplementären Einkerbungen (18), mit denen die Laufrollen (13, 14) ausgestattet sind, untereinander in Drehung gekoppelt sind und auf der Tragstange (15) translatorisch unbeweglich sind.

8. Sortiertisch mit Sortierrollen nach einem der Ansprüche 4 bis 7, **dadurch gekennzeichnet, dass** eines der Enden der Tragstangen (15) der Mitnehmer-/ Reinigungsrollen (1) und/oder der Sortierrollen (2) mittels einer Achse (28), die axial beweglich und einziehbar in eine Achsbohrung (29) des Endes eingreift, montiert ist, wobei diese einziehbare Achse (28) der Einwirkung einer Spannfeder (30) unterworfen ist, um sie in Eingriff mit der Bohrung (29) zu halten.

9. Weinlesemaschine, **dadurch gekennzeichnet, dass** sie zumindest einen Sortiertisch mit Rollen (104) umfasst, der nach einem der Ansprüche 1 bis 8 ausgeführt ist.

10. Weinlesemaschine nach Anspruch 9 der Art, die mit einem oder mehreren Behältern (105) zum Aufnehmen der Ernte ausgestattet ist, **dadurch gekennzeichnet, dass** ein Sortiertisch mit Rollen oberhalb der oberen Öffnung (106) des Behälters bzw. der Behälter (105) angeordnet ist.

11. Weinlesemaschine nach Anspruch 10, **dadurch gekennzeichnet, dass** der Sortiertisch bzw. jeder Sortiertisch (104) über eine seiner Seiten kippbar über dem darunter liegenden Aufnahmebehälter (105) angebracht ist.

12. Weinlesemaschine nach einem der Ansprüche 9 oder 10, **dadurch gekennzeichnet, dass** der Sortiertisch bzw. jeder Sortiertisch (104) in zwei Teilen ausgeführt ist, d. h. einem nachgelagerten Teil (104A) und einem vorgelagerten Teil (104B), und einer (104A) dieser Teile kippbar angebracht ist, so dass es möglich ist, ihn zu versenken und die obere Öffnung (106) des darunter liegenden Aufnahmebehälters (105) freizugeben.

## Claims

1. Sorting table with sorting rollers for the removal of foreign bodies (P, PT, CE) remaining mixed with grape berries (B) after the grape harvest has been stripped from the main stalk, said foreign bodies comprising small foreign bodies (P) of a very small size smaller than that of the grape berries (B), debris of elongate shape (PT), and foreign bodies (CE) of a size larger than that of the grape berries (B), said table comprising a sorting system formed by a succession of adjacent rotary rollers of cylindrical overall shape (1, 2) disclosed in parallel so as to form a sorting plane, comprising an upstream part (3) and a downstream part (4), the upstream part (3) being made up of feeding-cleaning rollers (1) and the downstream part (4) of sorting rollers (2), and drive means (19, 20) allowing the set of rollers (1, 2) of the sorting table to be rotationally driven in the same direction so as to allow the grape harvest tipped out onto the upstream part (3) of this sorting plane to be driven in a direction perpendicular to the axis of said sorting rollers (2) and over the entire length of said sorting plane, said feeding-cleaning rollers (1) comprising a succession of circular reliefs (7) separated by circular grooves (8) and equipped, on their periphery, with based-apart lugs or notches or bumps, said feeding-cleaning rollers (1) being immobilized in translation and positioned in such a way that their circular reliefs (7) engage in the grooves (8) of the adjacent roller or rollers, a clearance or gap (5) of reduced size being formed between the interpenetrating parts of the adjacent rollers, so as to allow only the small foreign bodies (P) to pass, said feeding-cleaning rollers allowing debris of elongate shape (PT) to be oriented perpendicular to the axis of rotation of said rollers in order to convey it, in this position, as far as said sorting rollers, said sorting rollers (2) being immobilized in translation in said direction perpendicular to the axis of said rotary rollers and arranged in such a way as to create a plurality of openings (6) between two adjacent sorting rollers (2) so as to allow only grape berries (B) for sorting to pass and drop through, the foreign bodies (CE) of a size greater than that of said berries which remain at the surface of the mobile sorting plane, being removed with the debris of elongate shape (PT) at the downstream end of said plane, said sorting rollers (2) having a succession of circular reliefs (9) separated by circular grooves (10), these circular reliefs comprising a central circular crest or ridge connected to the bottom of the grooves (10) via a concave surface, said sorting rollers (2) being positioned in such a way that the circular grooves (10) of these rollers, together with the circular grooves of the adjacent roller or rollers form the said openings (6), the circular reliefs (9) of each sorting roller (2) being slightly offset with respect to the circular reliefs (9) of the adjacent sorting roller or rollers (2) and their adjacent edges being partially engaged in the grooves (10) of said adjacent roller or rollers, so as to delimit said openings (6).

2. Sorting table with sorting rollers according to Claim 1, **characterized in that** the circular reliefs (9) of the sorting rollers (2) are equipped at the periphery with spaced-apart lugs or notches or bumps (12).

3. Sorting table with sorting rollers according to Claim 1, **characterized in that** the circular grooves (10) of the sorting rollers (2) are provided with angularly spaced channels (12a).

4. Sorting table with sorting rollers according to any one of Claims 1 to 3, **characterized in that** the rollers (1, 2) are mounted removably and interchangeably on the supporting structure (27A-27B) of the table.

5. Sorting table with sorting rollers according to any one of Claims 1 to 4, **characterized in that** the circular reliefs (7, 9) and the circular grooves (8, 10) of the feeding-cleaning rollers (1) and/or of the sorting rollers (2) are formed by roll members (13, 14) threaded successively onto a support bar (15), each roll member comprising a circular relief (7, 9) and half a circular groove (8, 10) disposed on each side of said circular relief, so that said circular grooves are formed by the junction of two adjacent roll members (13-13, 14-14).

6. Sorting table with sorting rollers according to Claim 5, **characterized in that** the roll members (13, 14) that constitute the rollers of the sorting table are mounted removably and interchangeably on their support bar (15).

7. Sorting table with sorting rollers according to either of Claims 5 and 6, **characterized in that** the roll members (13, 14) are simply threaded onto their support bar (15) and are coupled to one another in respect of rotation by means of complementary arcuate lateral notches (17) on slots (18) with which said roll members (13, 14) are equipped and are immobilized in respect of translation on said support bar (15).

8. Sorting table with sorting rollers according to any one of Claims 4 to 7, **characterized in that** one of the ends of the support bars (15) of the feeding-cleaning rollers (1) and/or of the sorting rollers (2) is mounted by means of a spindle (28) able to move axially and engaged retractably in an axial bore (29) of said end, this retractable spindle (28) being subject to the action of a spring (30) that tends to keep it engaged in said bore (29).

9. Grape harvesting machine, **characterized in that** it comprises at least one sorting table with rollers (104) produced according to any one of Claims 1 to 8.

10. Grape harvesting machine according to Claim 9, of the kind equipped with one or more bins (105) for receiving the harvest, **characterized in that** a sorting table with rollers is disposed above the upper opening (106) of said bin or bins (105).

11. Grape harvesting machine according to Claim 10, **characterized in that** the sorting table or each sorting table (104) is mounted with the ability to tilt, via one of its sides, on the subjacent receiving bin (105).

12. Grape harvesting machine according to either of Claims 9 and 10, **characterized in that** the sorting table or each sorting table (104) is produced in two parts, namely a downstream part (104A) and an upstream part (104B), and one (104A) of these parts is mounted with the ability to tilt, so as to allow it to be retracted so as to clear the upper opening (106) of the subjacent receiving bin (105) .
